# EUROPEAN PATENT SPECIFICATION

(11) **EP 1 894 960 B1**
(45) Date of publication and mention of the grant of the patent: **09.11.2011**
(21) Application number: 07004951.5
(22) Date of filing: 09.03.2007
(51) Int. Cl.: C08G 67/02

(54) **Process for producing polyketone**
Herstellungsverfahren für Polyketon
Procédé de production de polycétone

(30) Priority: 31.08.2006 KR 20060083274
(43) Date of publication of application: 05.03.2008
(73) Proprietor: Hyosung Corporation, Dongan-ku Anyang-si Kyonggi do 431-080 (KR)
(72) Inventor: Cho, Hae-Souk, Anyang-si Kyonggi-do 431-080 (KR); Choi, Jong-In, Anyang-si Kyonggi-do 431-080 (KR); Shim, Jae-Yoon, Anyang-si Kyonggi-do 431-080 (KR); Yoon, Sung-Kyun, Anyang-si Kyonggi-do 431-080 (KR); Jang, Jean-Young, Anyang-si Kyonggi-do 431-080 (KR); Kim, Heon-Su, Anyang-si Kyonggi-do 431-080 (KR)
(74) Representative: Katzameyer, Michael

(56) References cited:
- WO-A-00/29462
- DE-A1- 10 303 312

## Description

### Technical Field

The present invention relates to a process for preparing polyketone with improved catalytic activity and intrinsic viscosity, and specifically a process for preparing polyketone, comprises copolymerization of carbon monoxide and an ethylenically unsaturated compound in a liquid medium in the presence of a catalyst, wherein the catalyst is an organometallic complex comprising (a) a Group 9, Group 10 or Group 11 transition metal complex and (b) a ligand containing a Group 15 element, and the (b) component is 1, 3-bis [bis (2-methoxy-5-methylphenyl)phosphino]propane, and a mixed solvent of 70 to 90 vol% of acetic acid and 10 to 30 vol% of water is used as a liquid medium.

A copolymer of carbon monoxide and an ethylenically unsaturated compound, particularly polyketone in which a repeating unit derived from carbon monoxide and a repeating unit derived from an ethylenically unsaturated compound are alternately linked to each other, has excellent mechanical thermal properties, as well as high abrasion resistance, chemical resistance, and gas barrierability such that it is useful in a variety of applications. Moreover, the polymer of the alternately copolymerized polyketone has higher mechanical and thermal properties, and is useful as an economically available engineering plastic material. In particular, it is useful as a part such as a gear in vehicles due to its high abrasion resistance; useful as a lining material for a chemical transferring pipe due to its high chemical resistance; and useful as a light gasoline tank such as a lining material due to it high gas barrierability. Further, if ultra-high molecular weight polyketone having an intrinsic viscosity of 2 or more is used for fibers, a high stretch ratio can be obtained, and a fiber with high strength and high elasticity, aligned in the elongation direction, can be prepared. Thus prepared fiber can be desirably used as a material for a building material such as a reinforcement material for a belt or a rubber hose, a tire cord, and a concrete reinforcement material, or in the industrial material.

### Background Art

As a process for obtaining high molecular weight polyketone which exhibits with high mechanical thermal properties, a process comprising performing polymerization using a catalyst comprising palladium, 1,3-bis[di(2-methoxyphenyl)phosphino]propane, and anion at a lower temperature is disclosed in EP Patent No. 319083. Another method using a catalyst comprising palladium, 2-(2,4,6-trimethylbenzene)-1,3-bis[di(2-methoxyphenyl)phosphino]propane, and anion is disclosed in JP-A No. 4-227726. Another process using a catalyst comprising palladium, 2-hydroxy-1,3-bis[di(2-methoxyphenyl)phosphino]propane, and anion is disclosed in JP-A No. 5-140301. However, by any of these processes, the amount of the polyketone obtained per a catalyst is low, the method for synthesis of a phosphor ligand is difficult, and those processes need high costs, thereby it being economically problematic.

As a process using an inexpensive catalyst to obtain a high molecular weight polyketone, a process comprising performing polymerization in a solvent of tert-butanol using a catalyst comprising palladium, 1,3-bis(diphenylphosphino)propane, and an anion of boron-based fluorides is disclosed in JP-A No. 6-510552. According to this process, high molecular weight polyketone is obtained, but the amount of the polyketone obtained per a catalyst is very low, and as a result, the cost of polyketone is increased, thereby it being problematic.

As a process for obtaining high molecular weight polyketone economically, a process comprising performing polymerization in a mixed solvent of methanol and 1 to 50 vol% of water is disclosed in JP-A No. 8-283403. In this process, a catalyst comprising a Group 10 element such as palladium, and 1,3-bis(diphenylphosphino)propane, and an anion of an inorganic acid is used. In particular, in the case of using palladium acetate, 1,3-bis(diphenylphosphino)propane, and phosphotungstic acid in a solvent of methanol with 17 vol% of water, polymerization at 85°C at 4.8 MPa of an equimolar mixed gas of ethylene and carbon monoxide for 30 min provides a polymer with an intrinsic viscosity of 1.36. At that time, the catalytic activity is 5.7 kg/g-Pd·hr. If for the mixed solvent, sulfuric acid is used instead of phosphotungstic acid, the catalytic activity is 9.5 kg/g-Pd.hr. According to this process, due to high catalytic activity, high molecular weight polyketone is obtained to some what, but even with longer polymerization time, it would be impossible to obtain a polymer with an intrinsic viscosity of 2 or more, which is required so as to be used as a high performance material.

EP Patent No. 0361584 discloses a process comprising performing polymerization at a lower pressure using palladium, 1,3-bis(diphenylphosphino)propane, and trifluoroacetic acid. According to this process, a polymer with a catalytic activity of 1.3 kg/g-Pd·hr, and an intrinsic viscosity of 1.8 can be obtained by polymerization at an input ratio of 1:2 of ethylene and carbon dioxide at 50°C and at 4 MPa for 5.2 hours. By this process, polyketone can be obtained at relatively low temperatures and low pressures, but it is be impossible to obtain a polymer with a high intrinsic viscosity, which is required so as to be used as a high performance material.

JP-A No. 2002-317044 discloses the use of sulfuric acid as an inorganic acid in a catalyst system as in the prior art. In this case of using a Group 10 element such as palladium, and 1,3-bis(diphenylphosphino)propane in a solvent of methanol, polymerization at 80°C at 5.5 MPa of an equimolar mixed gas of ethylene and carbon monoxide for 30 min provides a polymer with an intrinsic viscosity of 6.45. At that time, the catalytic activity is 6.0 kg/gPd·hr.

DE 103 03 312 A1 describes a process for the preparation of different polymers, including polyketones, wherein a metal complex catalyst is used. This document refers to a general formula for the metal complex catalyst which includes 1,3-bis[bis(2-methoxy-5-methylphenyl)phosphino]propane, however, there is not any individual disclosure of this ligand. DE 103 03 312 A1 further teaches to use a liquid medium which is water plus up to 10% of an organic solvent miscible with water but not a liquid medium which is a mixed solvent of 70 to 90 vol.% of acetic acid and 10 to 30 vol.% of water.

WO 00/29462 A discloses a process for the preparation of copolymers of carbon monoxide in the presence of a catalyst composition comprising a complex of a group VIII metal with a bidentate ligand such as 1,3-bis[bis(2-methoxy-5-methylphenyl)phosphino]propane. The liquid reaction medium is an alcohol, such as methanol, but not a mixture of acetic acid and water.

As such, in a process for preparing polyketone using carbon monoxide and an ethylenically unsaturated compound as raw materials, there is a desire of development of a technique for preparing polyketone having high catalytic activity as well as high intrinsic viscosity suitable for the use as a tire cord.

In order to solve the above-mentioned problems, it is an object of the present invention to provide a process for preparing polyketone, in which an organometallic complex comprising palladium acetate, and 1,3-bis [bis (2-methoxy-5-methylphenyl)phosphino]propane are used as the catalyst components, and a mixed solvent of 70 to 90 vol% of acetic acid and 10 to 30 vol% of water as a liquid medium is added to improve the catalytic activity, the intrinsic viscosity, and the yield, even during a short polymerization time.

### Disclosure of the Invention

According to the present invention, in the process for preparing polyketone comprising copolymerization of carbon monoxide and an ethylenically unsaturated compound in a liquid medium in the presence of a catalyst, the catalyst is an organometallic complex comprising (a) a Group 9, Group 10 or Group 11 transition metal complex, and (b) a ligand containing a Group 15 element, and the (b) component is 1,3-bis[bis(2-methoxy-5-methylphenyl)phosphino]propane.

According to the present invention, a mixed solvent of 70 to 90 vol% of acetic acid and 10 to 30 vol% of water is used as a liquid medium.

According to the present invention, the transition metal component (a) of the catalyst is palladium acetate.

According to the present invention, the molar ratio of the (a) component : the (b) component of the catalyst is 1 : 1.2.

Hereinbelow, the present invention will be described in detail.

In the process for preparing polyketone of the present invention, which comprises copolymerization of carbon monoxide and an ethylenically unsaturated compound in a liquid medium in the presence of a catalyst which is an organometallic complex comprising (a) a Group 9, Group 10 or Group 11 transition metal complex, and (b) a ligand containing a Group 15 element, a mixed solvent of 70 to 90 vol% of acetic acid and 10 to 30 vol% of water is as a liquid medium; 1,3-bis[bis(2-methoxy-5-methylphenyl)phosphino]propane is used as a catalyst component; and carbon monoxide and the ethylenically unsaturated compound are introduced at a molar ratio of 1 : 2.

In the present invention, as a liquid medium, methanol, dichloromethane, nitromethane, or the like, which is conventionally used for the preparation of polyketone, is not used, but a mixed solvent of acetic acid and water is used. By using acetic acid and water for the preparation of polyketone according to the present invention, the cost for the preparation of polyketone can be reduced, as well as the catalytic activity can be improved.

If a mixed solvent of acetic acid and water is used as a liquid medium, a low concentration of water as low as 30 vol% or less does not significantly affect the catalytic activity, whereas a high concentration of water as high as 80 vol% or more tends to decrease the catalytic activity.

Accordingly, in the present invention, a mixed solvent of 70 to 90 vol% of acetic acid and 10 to 30 vol% of water is used as a liquid medium.

In the present invention, the catalyst comprises (a) a Group 9, Group 10 or Group 11 transition metal complex (IUPAC, Inorganic chemical nomenclature recommendations, revised in 1989), and (b) a ligand containing a Group 15 element.

The transition metal complex (a) is palladium acetate.

As the (b) ligand containing a Group 15 element in the catalyst in the present invention, 1, 3-bis [bis (2-methoxy-5-methylphenyl)phosphino]propane(BIBMAPP) represented by the formula 1, which differs from the related art is used. By using 1,3-bis[bis(2-methoxy-5-methylphenyl)phosphino]propane as a ligand component of the catalyst, polyketone with high catalytic activity can be prepared. In the present invention, by using palladium acetate and 1,3-bis[bis(2-methoxy-5-methylphenyl)phosphino]propane as the catalyst components, and a mixed solvent of 70 to 90 vol% of acetic acid and 10 to 30 vol% of water as a liquid medium, the catalytic activity is improved, and even with a shorter reaction time, the activity is improved.

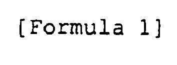

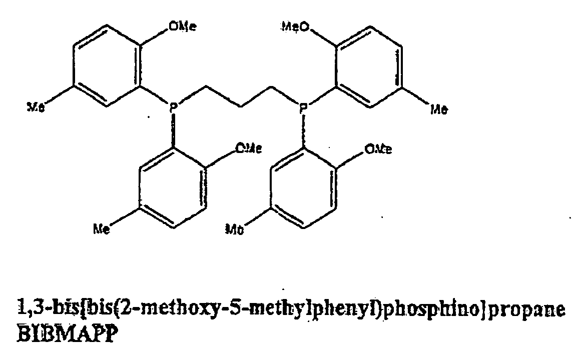

The amount of the transition metal complex (a) to be used suitably varies depending on the kind of the selected ethylenically unsaturated compound, or other polymerization conditions. Accordingly, the range of the amount cannot be limited to a specific value, but usually it is preferably in the range of 0.01 to 100 mmol, and more preferably in the range of 0.01 to 10 mmol, per 1 liter of the capacity of the reaction zone. The capacity of the reaction zone refers to a capacity of the liquid phase in the reactor.

Also, the amount of the ligand (b) is not particularly limited, but usually it is preferably in the range of 0.1 to 3 mol, and more preferably in the range of 1 to 3 mol per 1 mol of the transition metal complex (a).

In the present invention, examples of the ethylenically unsaturated compound to be copolymerized with carbon monoxide include an α-olefin such as ethylene, propylene, 1-butene, 1-hexene, 4-methyl-1-pentene, 1-octene, 1-decene, 1-dodecene, 1-tetracene, 1-hexadecene, and vinylcyclohexane; an alkenyl aromatic compound such as styrene, and a-methylstyrene; a cyclic olefin such as cyclopentene, norbornene, 5-methylnorbornene, 5-phenylnorbornene, tetracyclododecene, tricyclododecene, tricycloundecene, pentacyclopentadecene, pentacyclohexadecene, and 8-ethyltetracyclododecene; vinyl halide such as vinyl chloride; acrylic acid ester such as ethylacrylate, and methylacrylate. These ethylenically unsaturated compounds can be used singly or in a mixture. Among these, as the ethylenically unsaturated compound, an α-olefin is preferable, and an olefin having 2 to 4 carbon atoms is more preferable, and ethylene is most preferable.

In the present invention, the input molar ratio of carbon monoxide and the ethylenically unsaturated compound is preferably 1 : 2.0. In the preparation of polyketone, it is general that the input ratio of carbon monoxide and the ethylenically unsaturated compound is 1 : 1. However, it was found that in the present invention using palladium acetate and 1,3-bis[bis(2-methoxy-5-methylphenyl)phosphino]propane, adjustment of the ratio of carbon monoxide and the ethylenically unsaturated compound to 1: 2.0 improves the catalytic activity and the intrinsic viscosity.

In the present invention, copolymerization of carbon monoxide and the ethylenically unsaturated compound occurs in the presence of an organometallic complex comprising (a) palladium acetate as a transition metal complex, (b) a ligand containing a Group 15 element, and (c) an anion of an acid with pKa of 4 or lower, and the catalyst is produced by bring the above-described two components into contact. For contacting, any well-known method can be used. For example, it is preferable that two components are preliminarily mixed in a suitable solvent into a solution and then used; or three components are separately supplied to a polymerization system, wherein they are then brought into contact.

When the present invention is carried out, as the polymerization method, a solution polymerization method using a liquid medium, a suspension polymerization method, a gas phase polymerization method comprising impregnating a small amount of a catalyst solution having a high concentration, or the like can be used. Polymerization is preferably carried out in either a batch mode or a continuous mode. As the reactor used for polymerization, a well-known reactor may be used as it is, or as modified, if desired. The polymerization temperature is not particularly limited, but it is generally in the range of 40 to 180°C, and preferably in the range of 50 to 120°C. The pressure upon polymerization is not limited, but it is generally in the range of normal pressure to 20 MPa, and preferably in the range of 4 to 15 MPa.

Hereinafter, the constitution and the effects of the present invention will be described in detail with reference to Examples and Comparative Examples. These Examples are provided only for the illustrative purpose, and it should not be construed that the scope of the invention is limited thereto. In Examples and Comparative Examples, the intrinsic viscosity and the catalytic activity are evaluated in the following methods.

### (1) Intrinsic viscosity

The polymerized resin is dissolved in a thermostat at 60°C at a concentration of 0.01 g/100 ml to 1 g/100 ml (m-cresol) for 1 to 5 hours, and then the viscosity is measured using an Ubelode viscometer at 30°C. The viscosities vs. the concentrations are plotted and extrapolated to determine an intrinsic viscosity.

### (2) Catalytic activity

The catalytic activity is determined in the weight of the polymerized resin/the weight of palladium·time (kg/gPd·hr).

### EXAMPLES

### (Example 1)

0.0129 g of palladium acetate, and 0.0366 g of 1,3-bis[bis(2-methoxy-5-methylphenyl)phosphino]propane (BIBMAPP) were dissolved in the mixture of 2249 ml of acetic acid and 417ml of water. After removing the air from the solution under vacuum, the obtained solution was charged into a stainless-steel autoclave which had been purged with nitrogen. After sealing the autoclave, the contents were heated under stirring at a speed of 700 rpm. When the internal temperature reached 90°C, a mixed gas of carbon monoxide and ethylene (the molar ratio of 1:2) was added until the internal pressure of the autoclave became 65 bar. The contents were stirred for 1 hour while the internal temperature and the internal pressure were maintained at 90°C and 65 bar, respectively. After cooling, the contents were taken out from the autoclave which had been degassed. The solution was filtered and then washed with methanol several times. The solution was dried under reduced pressure at room temperature to 80°C, to obtain 73 g of a polymer.
The results of ¹³C-NMR and IR confirmed that the polymer was polyketone which substantially consists of repeating units each derived from carbon monoxide and ethylene. The catalytic activity was equal to 11.8 kg/g-Pd.hr, and the intrinsic viscosity was 3.1 dl/g. The results are summarized in Table 1.

### (Example 2)

0.0129 g of palladium acetate, and 0.0366 g of 1,3-bis[bis(2-methoxy-5-methylphenyl)phosphino]propane (BIBMAPP) were dissolved in the mixture of 2249 ml of acetic acid and 417ml of water. After removing the air from the solution under vacuum, the obtained solution was charged into a stainless-steel autoclave which had been purged with nitrogen. After sealing the autoclave, the contents were heated under stirring at a speed of 700 rpm. When the internal temperature reached 90°C, a mixed gas of carbon monoxide and ethylene (the molar ratio of 1:2) was added until the internal pressure of the autoclave became 70 bar. The contents were stirred for 15 hours while the internal temperature and the internal pressure were maintained at 90°C and 70 bar, respectively. After cooling, the contents were taken out from the autoclave which had been degassed. The solution was filtered and then washed with methanol several times. The solution was dried under reduced pressure at room temperature to 80°C, to obtain 890.3 g of a polymer.

The results of ¹³C-NMR and IR confirmed that the polymer was polyketone which substantially consists of repeating units each derived from carbon monoxide and ethylene. The catalytic activity was equal to 9.5 kg/gPd·hr, and the intrinsic viscosity was 5.0 dl/g.

The results are summarized in Table 1.

### (Example 3)

0.0236 g of palladium acetate, and 0.0674 g of 1,3-bis[bis(2-methoxy-5-methylphenyl)phosphino]propane (BIBMAPP) were dissolved in the mixture of 1350 ml of acetic acid and 250ml of water. After removing the air from the solution under vacuum, the obtained solution was charged into a stainless-steel autoclave which had been purged with nitrogen. After sealing the autoclave, the contents were heated under stirring at a speed of 700 rpm. When the internal temperature reached 90°C, a mixed gas of carbon monoxide and ethylene (the molar ratio of 1:2) was added until the internal pressure of the autoclave became 45 bar. The contents were stirred for 1 hour while the internal temperature and the internal pressure were maintained at 90°C and 45 bar, respectively. After cooling, the contents were taken out from the autoclave which had been degassed. The solution was filtered and then washed with methanol several times. The solution was dried under reduced pressure at room temperature to 80°C, to obtain 183.9 g of a polymer.

The results of ¹³C-NMR and IR confirmed that the polymer was polyketone which substantially consists of repeating units each derived from carbon monoxide and ethylene. The catalytic activity was equal to 16,24 kg/gPd·hr, and the intrinsic viscosity was 2.3 dl/g.

The results are summarized in Table 1.

### (Example 4)

0.0129 g of palladium acetate, and 0.0366 g of 1,3-bis[bis(2-methoxy-5-methylphenyl)phosphino]propane (BIBMAPP) were dissolved in the mixture of 2249 ml of acetic acid and 417ml of water. After removing the air from the solution under vacuum, the obtained solution was charged into a stainless-steel autoclave which had been purged with nitrogen. After sealing the autoclave, the contents were heated under stirring at a speed of 700 rpm. When the internal temperature reached 90°C, a mixed gas of carbon monoxide and ethylene (the molar ratio of 1:2) was added until the internal pressure of the autoclave became 70 bar. The contents were stirred for 1 hour while the internal temperature and the internal pressure were maintained at 90°C and 70 bar, respectively. After cooling, the contents were taken out from the autoclave which had been degassed. The solution was filtered and then washed with methanol several times. The solution was dried under reduced pressure at room temperature to 80°C, to obtain 72.5 g of a polymer.

The results of ¹³C-NMR and IR confirmed that the polymer was polyketone which substantially consists of repeating units each derived from carbon monoxide and ethylene. The catalytic activity was equal to 11.6 kg/gPd·hr, and the intrinsic viscosity was 4.2 dl/g.

The results are summarized in Table 1.

**[Table 1]**

| | I.V · (dl/g) | Catalytic Activity (Kg/gPd · hr) | Amount Produced (g) | Catalyst system [Amount of catalyst input (g)] | | Solvent (ml) | | Input ratio | Rx Temp (°C) | Rx Pressure (bar) | Polymerization Time (hr) | Partial pressure of gas (CO:Et) |
|---|---|---|---|---|---|---|---|---|---|---|---|---|
| | | | | Pd | Ligand | Acetic acid | water | Ligand / Pd | | | | |
| Ex. 1 | 3.1 | 11.8 | 73 | Pd(OAc) ₂ | BIBMAPP | 2249 | 417 | 1.2 | 90 | 65 | 1 | 1.2 |
| | | | | 0.0129 | 0.0366 | | | | | | | |
| Ex. 2 | 5.0 | 9.5 | 890.3 | Pd(OAC)₂ | BIBMAPP | 2249 | 417 | 1.2 | 90 | 70 | 15 | 1.2 |
| | | | | 0.0129 | 0.0366 | | | | | | | |
| Ex. 3 | 2.3 | 16.24 | 183.9 | Pd(OAC)₂ | BIBMAPP | 1350 | 250 | 1.2 | 90 | 45 | 1 | 1.2 |
| | | | | 0.0236 | 0.0674 | | | | | | | |
| Ex. 4 | 4.2 | 11.6 | 72.5 | Pd(OAC)₂ | BIBMAPP | 2249 | 417 | 1.2 | 90 | 70 | 1 | 1.2 |
| | | | | 0.0129 | 0.0366 | | | | | | | |

| | | | | | | | | | | | | |
|---|---|---|---|---|---|---|---|---|---|---|---|---|
| Pd(OAc)₂: Palladium acetate BIBMAPP: 1,3-Bis[bis(2-methoxy-5-methylphenyl)phosphino]propane | | | | | | | | | | | | |

### (Comparative Example 1)

0.0129 g of palladium acetate, and 0.0307 g of 1,3-bis[di(2-methoxyphenyl)phosphino]propane were dissolved in the mixture of 2249 ml of acetic acid and 417 ml of water. After removing the air from the solution under vacuum, the obtained solution was charged into a stainless-steel autoclave which had been purged with nitrogen. After sealing the autoclave, the contents were heated under stirring at a speed of 700 rpm. When the internal temperature reached 90°C, a mixed gas of carbon monoxide and ethylene (the molar ratio of 1:2) was added until the internal pressure of the autoclave became 65 bar. The contents were stirred for 1 hour while the internal temperature and the internal pressure were maintained at 90°C and 65 bar, respectively. After cooling, the contents were taken out from the autoclave which had been degassed. The solution was filtered and then washed with methanol several times. The solution was dried under reduced pressure at room temperature to 80°C, to obtain 58.4 g of a polymer.

The results of ¹³C-NMR and IR confirmed that the polymer was polyketone which substantially consists of repeating units each derived from carbon monoxide and ethylene. The catalytic activity was equal to 9.4 kg/gPd·hr, and the intrinsic viscosity was 3.1 dl/g.

The results are summarized in Table 2.

### (Comparative Example 2)

0.0129 g of palladium acetate, and 0.0307 g of 1,3-bis[di(2-methoxyphenyl)phosphino]propane were dissolved in the mixture of 2249 ml of acetic acid and 417 ml of water. After removing the air from the solution under vacuum, the obtained solution was charged into a stainless-steel autoclave which had been purged with nitrogen. After sealing the autoclave, the contents were heated under stirring at a speed of 700 rpm. When the internal temperature reached 90°C, a mixed gas of carbon monoxide and ethylene (the molar ratio of 1:2) was added until the internal pressure of the autoclave became 70 bar. The contents were stirred for 15 hours while the internal temperature and the internal pressure were maintained at 90°C and 70 bar, respectively. After cooling, the contents were taken out from the autoclave which had been degassed. The solution was filtered and then washed with methanol several times. The solution was dried under reduced pressure at room temperature to 80°C, to obtain 690.2 g of a polymer.

The results of ¹³C-NMR and IR confirmed that the polymer was polyketone which substantially consists of repeating units each derived from carbon monoxide and ethylene. The catalytic activity was equal to 7.4 kg/gPd·hr, and the intrinsic viscosity was 4.9 dl/g.

The results are summarized in Table 2.

### (Comparative Example 3)

0.0236g of palladium acetate, and 0.0559 g of 1,3-bis[di(2-methoxyphenyl)phosphino]propane were dissolved in the mixture of 1350 ml of acetic acid and 250 ml of water. After removing the air from the solution under vacuum, the obtained solution was charged into a stainless-steel autoclave which had been purged with nitrogen. After sealing the autoclave, the contents were heated under stirring at a speed of 700 rpm. When the internal temperature reached 90°C, a mixed gas of carbon monoxide and ethylene (the molar ratio of 1:2) was added until the internal pressure of the autoclave became 45 bar. The contents were stirred for 1 hour while the internal temperature and the internal pressure were maintained at 90°C and 45 bar, respectively. After cooling, the contents were taken out from the autoclave which had been degassed. The solution was filtered and then washed with methanol several times. The solution was dried under reduced pressure at room temperature to 80°C, to obtain 164.2 g of a polymer.

The results of ¹³C-NMR and IR confirmed that the polymer was polyketone which substantially consists of repeating units each derived from carbon monoxide and ethylene. The catalytic activity was equal to 14.5 kg/gPd·hr, and the intrinsic viscosity was 2.1 dl/g.

The results are summarized in Table 2.

### (Comparative Example 4)

0.0129 g of palladium acetate, and 0.0307 g of 1,3-bis[di(2-methoxyphenyl)phosphino]propane were dissolved in the mixture of 2249 ml of acetic acid and 417 ml of water. After removing the air from the solution under vacuum, the obtained solution was charged into a stainless-steel autoclave which had been purged with nitrogen. After sealing the autoclave, the contents were heated under stirring at a speed of 700 rpm. When the internal temperature reached 90°C, a mixed gas of carbon monoxide and ethylene (the molar ratio of 1:2) was added until the internal pressure of the autoclave became 70 bar. The contents were stirred for 1 hour while the internal temperature and the internal pressure were maintained at 90°C and 70 bar, respectively. After cooling, the contents were taken out from the autoclave which had been degassed. The solution was filtered and then washed with methanol several times. The solution was dried under reduced pressure at room temperature to 80°C, to obtain 57.3 g of a polymer.

The results of ¹³C-NMR and IR confirmed that the polymer was polyketone which substantially consists of repeating units each derived from carbon monoxide and ethylene. The catalytic activity was equal to 9.2 kg/gPd·hr, and the intrinsic viscosity was 4.1 dl/g.

The results are summarized in Table 2.

**[Table 2]**

| Co. | I.V · (dl /g) | Catalytic Activity (Kg/gPd· hr) | Amount Produced (g) | Catalyst system [Amount of catalyst input (g)] | | Solvent (ml) | | Input ratio | Rx Temp (°C) | Rx Pressure (bar) | Polymerization Time (hr) | Partial pressure of gas (CO:Et) |
|---|---|---|---|---|---|---|---|---|---|---|---|---|
| | | | | Pd | Ligand | Acetic acid | water | Ligand / Pd | | | | |
| Ex. 1 | 3.1 | 9.4 | 58.4 | Pd(OAc) ₂ | BOOMPP | 2249 | 417 | 1.2 | 90 | 65 | 1 | 1.2 |
| | | | | 0.0129 | 0.0307 | | | | | | | |
| Ex. 2 | 4.9 | 7.4 | 690.2 | Pd(OAc)₂ | BDOMPP | 2249 | 417 | 1.2 | 90 | 70 | 15 | 1.2 |
| | | | | 0.0129 | 0.0307 | | | | | | | |
| Ex. 3 | 2.1 | 14.5 | 164.2 | Pd(OAc)₂ | BDOMPP | 1350 | 250 | 1.2 | 90 | 45 | 1 | 1.2 |
| | | | | 0.0236 | 0.0559 | | | | | | | |
| Ex. 4 | 4.1 | 9.2 | 57.3 | Pd(OAc)₂ | BDOMPP | 2249 | 417 | 1.2 | 90 | 70 | 1 | 1.2 |
| | | | | 0.0129 | 0.0307 | | | | | | | |

| | | | | | | | | | | | | |
|---|---|---|---|---|---|---|---|---|---|---|---|---|
| Pd(OAc)₂: Palladium acetate BDOMPP: 1,3-Bis[di(methoxyphenyl)phosphino]propane | | | | | | | | | | | | |

### Effects of the Invention

According to the present invention, by using 1,3-bis[bis(2-methoxy-5-methylphenyl)phosphino]propane as the ligand of the catalyst component, a mixed solvent of 70 to 90 vol% of acetic acid and 10 to 30 vol% of water as a liquid medium, and palladium acetate as a transition metal complex, a process for preparing polyketone with the improved catalytic activity and the improved activity even with a shorter reaction time, is provided.

## Claims

1. A process for preparing polyketone, comprising copolymerization of carbon monoxide and an ethylenically unsaturated compound in a liquid medium in the presence of a catalyst,
wherein the catalyst is an organometallic complex comprising (a) a Group 9, Group 10 or Group 11 transition metal complex, and (b) a ligand containing a Group 15 element,
the (a) component is palladium acetate, and
the (b) component is 1,3-bis[bis(2-methoxy-5-methylphenyl)phosphino]propane,
wherein the molar ratio of the (a) component : the (b) component of the catalyst is 1 : 1.2, and
wherein the liquid medium is a mixed solvent of 70 to 90 vol% of acetic acid and 10 to 30 vol% of water.

## Patentansprüche

1. Verfahren zur Herstellung von Polyketon, umfassend die Copolymerisation von Kohlenmonoxid und einer ethylenisch ungesättigten Verbindung in einem flüssigen Medium in Gegenwart eines Katalysators,
wobei der Katalysator ein organometallischer Komplex ist, umfassend (a) einen Komplex eines Übergangsmetalls der Gruppe 9, Gruppe 10 oder Gruppe 11 und (b) einen Liganden, der ein Element der Gruppe 15 enthält,
wobei die Komponente (a) Palladiumacetat ist, und
die Komponente (b) 1,3-Bis[bis(2-methoxy-5-methylphenyl)phosphino]propan ist,
wobei das Molverhältnis von Komponente (a) : Komponente (b) des Katalysators 1:1,2 beträgt und
wobei das flüssige Medium ein gemischtes Lösungsmittel von 70 bis 90 Vol.-% Essigsäure und 10 bis 30 Vol.-% Wasser ist.

## Revendications

1. Procédé de préparation d'une polycétone, comprenant la co-polymérisation de monoxyde de carbone et d'un composé à insaturation éthylénique dans un milieu liquide en présence d'un catalyseur,
dans lequel le catalyseur est un complexe organométallique comprenant (a) un complexe d'un métal de transition du groupe 9, du groupe 10 ou du groupe 11, et (b) un ligand contenant un élément du groupe 15,
le composant (a) étant l'acétate de palladium, et
le composant (b) étant le 1,3-bis[bis(2-méthoxy-5-méthylphényl)phosphino]propane,
dans lequel le rapport molaire du composant (a) : composant (b) du catalyseur est de 1 : 1,2, et
dans le milieu liquide est un mélange de solvants de 70 à 90% en volume d'acide acétique et de 10 à 30% en volume d'eau.
